# EUROPÄISCHE PATENTSCHRIFT

(11) **EP 1 370 415 B1**
(45) Veröffentlichungstag und Bekanntmachung des Hinweises auf die Patenterteilung: **07.08.2013**
(21) Anmeldenummer: 02703603.7
(22) Anmeldetag: 25.02.2002
(51) Int. Cl.: B32B 27/32, B41M 5/26, C08K 9/02, B65D 65/40

(54) **LASERMARKIERBARES LAMINAT**
LASER-MARKABLE LAMINATE
STRATIFIE POUVANT ETRE MARQUE AU LASER

(30) Priorität: 26.02.2001 DE 10109253
(43) Veröffentlichungstag der Anmeldung: 17.12.2003
(73) Patentinhaber: Treofan Germany GmbH & Co.KG, 66539 Neunkirchen (DE)
(72) Erfinder: BUSCH, Detlef, 66740 Saarlouis (DE); ROTH, Matthias, 66482 Zweibrücken (DE)
(74) Vertreter: Kremer, Viola
(86) Internationale Anmeldenummer: PCT/EP2002/001947
(87) Internationale Veröffentlichungsnummer: WO 2002/068192

(56) Entgegenhaltungen:
- WO-A-00/12305
- DE-A- 19 630 478
- DE-A- 19 905 415
- "LASERBESCHRIFTEN NUN AUCH BEI POLYOLEFINEN MOEGLICH" KUNSTSTOFFE, CARL HANSER VERLAG. MUNCHEN, DE, Bd. 79, Nr. 11, 1. November 1989 (1989-11-01), Seite 1138 XP000175227 ISSN: 0023-5563

## Beschreibung

Die Erfindung betrifft ein Laminat aus einer transparenten und opaken Polyolefinfolle. Das Laminat kann mit einem Laserstrahl markiert werden, wobei der Laserstrahl eine kontrastreiche, gut erkennbare Markierung erzeugt.

Im Stand der Technik sind Verfahren zur Markierung von polymeren Materialien bekannt. Derartige Materialien enthalten einen strahlungsempfindlichen Zusatz, welcher unter Einwirkung von Strahlung in bestimmten Wellenlängenbereichen eine Verfärbung des Materials bewirkt. Diese Zusätze bezeichnet man als Laserpigmente.

Ebenso sind im Stand der Technik Folien aus Polyolefinen bekannt, welche für bestimmte Anwendungszwecke biaxial orientiert werden und im allgemeinen eine Dicke im Bereich von 3 bis 100 µm haben. Es ist bekannt biaxial orientierte Folien durch geeignete Zusätze zu modifizieren. Derartige Zusätze können die Reibung, die Antistatik, die thermische Stabilität, die Optik oder andere Folieneigenschaften verbessern. Diese Zusätze dürfen jedoch andere wichtige Gebrauchseigenschaften nicht zu negativ beeinflussen.

DE19905415 beschreibt eine transparente, ein- oder mehrschichtige orientierte Polyolefinfolie aus mindestens einer Schicht, welche ein Schichtsilikat enthält, welches eine unregelmässige Oberflächenstruktur und keine Beschichtung aus Metalloxiden aufweist. Die Folie kann durch geeignete Verfahren mit Laserlicht unterschiedlicher Wellenlänge markiert werden, ohne durch den Laserstrahl Löcher in der Folie zu erzeugen. Die Folie zeichnet sich durch eine hohe Transparenz und eine gleichmässige Optik ohne Stippen und Blasen aus.

WO 00/12305 beschreibt eine opake biaxial orientierte Folie mit einem speziellen Schichtaufbau. Die Folien haben eine pigmentierte Basisschicht ohne Vakuolen und eine vakuolenhaftige Zwischenschicht und beidseitig Deckschichten. Die Folie zeichnet sich einerseits durch eine weiß-opake Optik aus, wie sie sonst bei Folien mit vakuolenhaltiger Basisschicht üblich ist. Die spezielle Struktur vermeidet den Knickbruch der opaken Folie beim Einsatz auf der Packmachine wie von Folien mit vakuolenhaltiger Basisschicht bekannt. Zusätzlich wird auf eine gute Integrität der Siegelnaht verwiesen.

Die Aufgabe der vorliegenden Erfindung bestand darin, eine lasermarkierbare Polyolefinfolie zur Verfügung zu stellen. Insbesondere soll die Folie durch geeignete Verfahren mit Laserlicht zu markieren sein. Die Lasermarkierung soll einen guten Kontrast aufweisen, vorzugsweise als dunkle Markierung erscheinen. Bei der Markierung dürfen keine durchgehenden Löcher durch den Laserstrahl in der Folie erzeugt werden. Gleichzeitig soll die Folie eine gute Optik und gute Gebrauchseigenschaften aufweisen.

Diese Aufgabe wird durch ein Laminat gelöst, welches aus zwei Folien A und B aus thermoplastischen Kunststoffen aufgebaut ist, wobei die transparente Folie A eine transparente, mehrschichtige orientierte Polyolefinfolie aus einer Basisschicht und transparente, mehrschichtige orientierte Polyolefinfolie aus einer Basisschicht und mindestens einer Deckschicht ist und die Basisschicht einen Zusatzstoff enthält, welcher Laserlicht in einem Wellenlängenbereich von 300 bis 10.000 nm absorbiert und die Folie B eine orientierte, opake, mehrschichtige Polyolefinfolie ist, welche aus einer Basisschicht und mindesten einer, auf dieser Basisschicht aufgebrachten, Zwischenschicht und mindestens einer auf der Zwischenschicht aufgebrachten Deckschicht aufgebaut ist, wobei die opake Folie in ihrer Basisschicht vakuoleninizierende Füllstoffe und in der Basisschicht und/oder der Zwischenschicht zusätzlich TiO₂ enthält, wobei die Zwischenschicht im wesentlichen keine Vakuolen aufweist.

Laminat bedeutet im Sinne der vorliegenden Erfindung einen mehrschichtigen Folienaufbau, welcher aus zwei separat produzierten Folien durch einen weiteren Verarbeitungsschritt (Laminierung) hergestellt wird, wobei die laminierten Folien ihrerseits mehrschichtige coextrudierte biaxial orientiere Folien sind.

Nachstehend wird der Aufbau und die Zusammensetzung der transparenten Folie A näher beschrieben. Die Folie A ist eine mehrschichtige, coextrudierte biaxial orientierte Folie.

Die Basisschicht der transparenten Folie A enthält im allgemeinen mindestens 85 Gew.-%, vorzugsweise 90 bis <100 Gew.-%, insbesondere 98 bis <100 Gew.-%, jeweils bezogen auf die Schicht, eines Polyolefins. Polyolefine sind beispielsweise Polyethylene, Polypropylene, Polybutylene oder Mischpolymerisate aus Olefinen mit zwei bis acht C-Atomen, worunter Polyethylene und Polyproyplene bevorzugt sind. Der genaue Gehalt an Polymer in der Basisschicht richtet sich nach den Mengen an Laserpigment und gegebenenfalls weiteren Additiven die zusätzlich in der Basisschicht enthalten sind.

Im allgemeinen enthält das Propylenpolymer mindestens 90 Gew.-%, vorzugsweise 94 bis 100 Gew.-%, insbesondere 98 bis 100 Gew.-%, Propylen. Der entsprechende Comonomergehalt von höchstens 10 Gew.-% bzw. 0 bis 6 Gew.-% bzw. 0 bis 2 Gew.-% besteht, wenn vorhanden, im allgemeinen aus Ethylen und Butylen. Die Angaben in Gew.-% beziehen sich jeweils auf das Propylenpolymere.

Bevorzugt sind isotaktische Propylenhomopolymere mit einem Schmelzpunkt von 140 bis 170°C, vorzugsweise von 155 bis 165°C, und einem Schmelzflußindex (Messung DIN 53 735 bei 21,6 N Belastung und 230°C) von 1,0 bis 10 g/10 min, vorzugsweise von 1,5 bis 6,5 g/10 min. Der n-heptanlösliche Anteil des Polymeren beträgt im allgemeinen 1 bis 10 Gew.-%, vorzugsweise 2-5 Gew.-% bezogen auf das Ausgangspolymere. Die Molekulargewichtsverteilung des Propylenpolymeren kann variieren.

Das Verhältnis des Gewichtsmittels M_{w} zum Zahlenmittel Mₙ liegt im allgemeinen zwischen 1 und 15, vorzugsweise bei 2 bis 10, ganz besonders bevorzugt bei 2 bis 6. Eine derartig enge Molekulargewichtsverteilung des Propylenhomopolymeren erreicht man beispielsweise durch dessen peroxidischen Abbau oder durch Herstellung des Polypropylens mittels geeigneter Metallocenkatalysatoren.

In einer weiteren Ausführungsform der Erfindung ist das eingesetzte Polypropylen der Basisschicht hochisotaktisch. Für derartige hochisotaktische Polypropylene beträgt der mittels. ¹³C-NMR-Spektroskopie bestimmte Kettenisotaxie-Index des n-heptanunlöslichen Anteils des Polypropylens mindestens 95 %, vorzugsweise 96 bis 99 %.

Es ist erfindungswesentlich, daß die Basisschicht der transparenten Folie A einen Zusatzstoff enthält, welcher Laserlicht in einem Wellenlängenbereich von 200 bis 10.000 nm, vorzugsweise in einem Bereich von 300 bis 2.000 nm absorbiert (nachstehend "Laserpigment" genannt). Besonders bevorzugt sind solche Laserpigmente, welche die Strahlung eines Nd-YAG Lasers (1064 nm oder 532 nm) absorbieren. Die Basisschicht der transparenten Folie A enthält das Laserpigment im allgemeinen in einer Menge von 0,1 bis 3 Gew.-%, vorzugsweise 0,2 bis 1,5 Gew.-%, insbesondere 0,3 bis 1 Gew.-%, bezogen auf das Gewicht der Basisschicht. Übersteigt der Gehalt 3 Gew.-% in der Basisschicht werden die optischen Eigenschaften der Folie nachteilig beeinflußt. Die Folie zeigt einen metallischen Glanz oder einen störenden Grauschleier, der für die meisten Anwendungen nicht erwünscht ist. Darüber hinaus wurde überraschenderweise gefunden, daß Konzentrationen über 3 Gew.-% Laserpigment die Markierbarkeit des Laminats nicht weiter verbessern. Zu niedrige Konzentrationen von unter 0,1 Gew.-% führen zu keiner zufriedenstellenden Markierung. Die Markierung selbst und der Kontrast ist schwach und zeigt bei üblichen Markiergeschwindigkeiten Fehlstellen und eine mit dem Laser gezogen Linie erscheint nicht mehr als Linie.

Als Laserpigmente sind beispielsweise Silikate, insbesondere Schichtsilikate wie Glimmer besonders geeignet, worunter Muscovit, Biotit, Phlogopit, Vermicullit sowie synthetische Glimmer besonders bevorzugt sind. Die mittlere Teilchengröße der Laserpigmente liegt im allgemeinen in einem Bereich von 1 bis 15µm, vorzugsweise 1 bis 10µm. Die maximale Teilchengröße sollte 25µm, vorzugsweise 20µm insbesondere 15µm nicht überschreiten (sogenannter cutoff). In einer bevorzugten Ausführungsform weisen die Laserpigmente eine Beschichtung aus oder einen Zusatz von Metalloxiden auf. Als Metalloxide für den Zusatz oder die Beschichtung sind SbO, SnO und/oder TiO2 bevorzugt. Derartige modifizierte Laserpigmente an sich als auch Verfahren zu ihrer Herstellung sind im Stand der Technik bekannt. Beispielsweise sind derartige Pigmente und ihre Verwendung in Kunststoffen im allgemeinen in der DE 195 25 960 beschrieben, auf welche hiermit ausdrücklich Bezug genommen wird.

In einer weiteren Ausführungsform werden die Laserpigment in größeren Mengen in eine Polymermatrix eingearbeitet und dann als sogenanntes Masterbatch zur Herstellung der Folie eingesetzt. Matrixpolymer für derartige Konzentrate oder Masterbatche können Polyethylen oder Polypropylene sein, welche im allgemeinen mit dem Basispolymeren der Folie verträglich sein sollten. Die Konzentration an Laserpigment in den Konzentraten liegt im allgemeinen in einem Bereich von 10 bis 30 Gew.-%, vorzugsweise 15 bis 25 Gew.-% bezogen auf das Konzentrat.

Zusätzlich zu den erfindungswesentlichen Laserpigmenten kann die Basisschicht der transparenten Folie A übliche Additive wie Neutralisationsmittel, Stabilisatoren, Antistatika und/oder Gleitmittel in jeweils wirksamen Mengen enthalten. Bevorzugt enthält die Basisschicht der transparenten Folie A eine Kombination aus Gleitmittel, wie z.B. Fettsäureamid und Antistatika wie z.B. tertiäre aliphatische Amine, sowie Neutralisationsmittel und Stabilisatoren.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit alpha-Hydroxy-(C₁-C₄)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-% in der Schicht. Ein insbesondere geeignetes aliphatisches Säureamid ist Erucasäureamid. Der Zusatz von Polydimethylsiloxanen ist im Bereich von 0,02 bis 2,0 Gew.-% bevorzugt, insbesondere Polydimethylsiloxane mit einer Viskosität von 5 000 bis 1 000 000 mm²/s.

Als Stabilisatoren können die üblichen stabilisierend wirkenden Verbindungen für Ethylen-, Propylen- und andere Olefinpolymere eingesetzt werden. Deren Zusatzmenge liegt zwischen 0,05 und 2 Gew.-%. Besonders geeignet sind pheno-lische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxy-phenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Dihydrotalcit, Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m²/g. Neutralisationsmittel werden üblicherweise in einer Menge von 0,01 bis 0,1 Gew.-% eingesetzt.

Die vorstehenden Angaben in Gew.-% beziehen sich jeweils auf das Gewicht der Basisschicht.

Die transparente Polyolefinfolie A umfaßt mindestens eine, in einer bevorzugten Ausführungsform beidseitig Deckschicht/en aus Polymeren aus Olefinen mit 2 bis 10 Kohlenstoffatomen, welche im allgemeinen auf der laserpigmenthaltigen Basisschicht aufgebracht ist/sind. Die Deckschicht/en enthält/enthalten im allgemeinen 95 bis 100 Gew.-% Polyolefin, vorzugsweise 98 bis <100Gew.-% Polyolefin, jeweils bezogen auf das Gewicht der Deckschicht/en.

Beispiele für geeignete olefinische Polymere der. Deckschicht/en sind Propylenhomopolymere, Co- oder Terpolymere aus Ethylen- Propylen und/oder Butyleneinheiten oder Mischungen aus den genannten Polymeren. Hierunter sind bevorzugte Polymerisate Propylenhomopolymer, wie sie vorstehend für die Basisschicht beschrieben wurden oder
- statistische Ethylen-Propylen-Copolymere mit einem Ethylengehalt von 1 bis 10 Gew.-%, bevorzugt 2,5 bis 8 Gew.-%, oder
- statistische Propylen-Butylen-1-Copolymere mit einem Butylengehalt von 2 bis 25 Gew.-%, bevorzugt 4 bis 20 Gew.-%, oder
- statistische Ethylen-Propylen-Butylen-1-Terpolymere mit einem Ethylengehalt von 1 bis 10 Gew.-% und einem Butylen-1-Gehalt von 2 bis 20 Gew.-%, oder
- eine Mischung oder Blend aus Ethylen-Propylen-Butylen-1-Terpolymeren und Propylen-Butylen-1-Copolymeren mit einem Ethylengehalt von 0,1 bis 7 Gew.-% und einem Propylengehalt von 50 bis 90 Gew:-% und einem Butylen-1-Gehalt von 10 bis 40 Gew.-%.

Die Angaben in Gew.-% beziehen sich jeweils auf das Gewicht des Polymeren. Die in der oder den Deckschicht eingesetzten vorstehend beschriebenen Co- und/oder Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140°C. Das vorstehend beschriebene Blend aus Co- und Terpolymeren hat einen Schmelzflußindex von 5 bis 9 g/10 min und einen Schmelzpunkt von 120 bis 150°C. Alle vorstehend angegebenen Schmelzflußindices werden bei 230°C und einer Kraft von 21,6 N (DIN 53 735) gemessen. Gegebenenfalls können alle vorstehend beschriebenen Deckschichtpolymeren peroxidisch abgebaut sein, wobei der Abbaufaktor im allgemeinen in einem Bereich von 1 bis 15, vorzugsweise 1 bis 8 liegt.

Gegebenenfalls können der/den Deckschicht/en die vorstehend für die Basisschicht beschriebenen Additive wie Antistatika, Neutralisationsmittel, Gleitmittel und/oder Stabilisatoren, sowie gegebenenfalls zusätzlich Antiblockmittel zugesetzt werden. Die Angaben in Gew.-% beziehen sich dann entsprechend auf das Gewicht der Deckschicht.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanamin-formaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,8 Gew.-%. Die mittlere Teilchengröße liegt zwischen 1 und 6 µm, insbesondere 2 und 5 µm.

In einer bevorzugten Ausführungsform wird die Oberfläche einer Deckschicht der transparenten Folie einem Verfahren zur Erhöhung der Oberflächenspannung unterworfen. Geeignet sind Corona-, Flamm- oder Plasmabehandlungsverfahren. Bei der Herstellung des erfindungsgemäßen Laminates aus einer einseitig behandelten transparenten Folie A, wird bevorzugt die oberflächenbehandelte Seite der transparenten Folie A gegen die Folie B laminiert.

Die Dicke der Deckschicht/en ist größer als 0,1 µm und liegt vorzugsweise im Bereich von 0,1 bis 5µm, insbesondere 0,5 bis 3 µm, wobei beidseitige Deckschichten gleich oder verschieden dick sein können. Die Gesamtdicke der Polyolefinfolie A kann variieren und beträgt vorzugsweise 4 bis 60 µm, insbesondere 5 bis 50 µm, vorzugsweise 10 bis 35 µm, wobei die Basisschicht etwa 40 bis 98 % der Gesamtfoliendidce ausmacht.

In einer weiteren Ausführungsform kann die Folie A zusätzlich einseitig oder beidseitig transparente Zwischenschichten aus den vorstehend für die Deckschichten und die Basisschicht beschriebenen Polyolefinen aufweisen.

Nachstehend wird der Aufbau und die Zusammensetzung der opaken Folie B näher beschrieben. Die Folie B ist eine mehrschichtige, coextrudierte, biaxial orientierte Folie.

Die Folie B des erfindungsgemäßen Laminats ist eine orientierte, opake, mehrschichtige Polyolefinfolie, welche aus einer Basisschicht und mindestens einer Zwischenschicht und mindestens einer Deckschicht aufgebaut ist, wobei die opake Folie in ihrer Basisschicht vakuoleninizierende Füllstoffe und in der Basisschicht und/oder der Zwischenschicht zusätzlich TiO2 enthält. Die Zwischenschicht der Folie B weißt jedoch im wesentlichen keine Vakuolen auf.

Die Basisschicht der opaken Folie enthält im allgemeinen mindestens 80 Gew.-%, vorzugsweise 85 bis 99 Gew.-%, insbesondere 98 bis 90 Gew.-%, jeweils bezogen auf die Schicht, eines Polyolefins. Polyolefine sind beispielsweise Polyethylene, Polypropylene, Polybutylene oder Mischpolymerisate aus Olefinen mit zwei bis acht C-Atomen, worunter Polyethylene und Polyproyplene bevorzugt sind. Der genaue Gehalt an Polymer in der Basisschicht richtet sich nach den Mengen an Füllstoffen und den gegebenenfalls zugesetzten Additiven die zusätzlich enthalten sind.

Im allgemeinen enthält das Propylenpolymer mindestens 90 Gew.-%, vorzugsweise 94 bis 100 Gew.-%, insbesondere 98 bis 100 Gew.-%, Propylen. Der entsprechende Comonomergehalt von höchstens 10 Gew.-% bzw. 0 bis 6 Gew.-% bzw. 0 bis 2 Gew.-% besteht, wenn vorhanden, im allgemeinen aus Ethylen und Butylen. Die Angaben in Gew.-% beziehen sich jeweils auf das Propylenpolymere.

Bevorzugt sind isotaktische Propylenhomopolymere mit einem Schmelzpunkt von 140 bis 170°C, vorzugsweise von 155 bis 165°C, und einen Schmelzflußindex (Messung DIN 53 735 bei 21,6 N Belastung und 230 °C) von 1,0 bis 10g/10min, vorzugsweise von 1,5 bis 6,5 g/10min. Der n-heptanlösliche Anteil des Polymeren beträgt im allgemeinen 1 bis 10 Gew.-%, vorzugsweise 2-5 Gew.-% bezogen auf das Ausgangspolymere. Die Molekulargewichtsverteilung des Propylenpolymeren kann variieren. Das Verhältnis des Gewichtsmittels M_{w} zum Zahlenmittel Mₙ liegt im allgemeinen zwischen 1 und 15, vorzugsweise bei 2 bis 10, ganz besonders bevorzugt bei 2 bis 6. Eine derartig enge Molekulargewichtsverteilung des Propylenhomopolymeren erreicht man beispielsweise durch dessen peroxidischen Abbau oder durch Herstellung des Polypropylens mittels geeigneter Metallocenkatalysatoren.

In einer bevorzugten Ausführungsform der Erfindung ist das eingesetzte Polypropylen hochisotaktisch. Für derartige hochisotaktische Polypropylene beträgt der mittels ¹³C-NMR-Spektroskopie bestimmte Kettenisotaxie-Index des n-heptanunlöslichen Anteils des Polypropylens mindestens 95 %, vorzugsweise 96 bis 99 %.

Die Basisschicht der opaken Folie enthält vakuoleniniziierende Füllstoffe im allgemeinen in einer Menge von maximal 20 Gew.-%, vorzugsweise 1 bis 15 Gew.-%, insbesondere 2 bis 10 Gew.-%, bezogen auf das Gewicht der Basisschicht.

"Vakuoleniniziierende Füllstoffe" sind feste Teilchen die mit der Polymermatrix unverträglich sind und beim Verstrecken der Folien zur Bildung von vakuolenartigen Hohlräumen führen. In der Regel haben die vakuoleniniziierenden Füllstoffe eine Mindestgröße von 1 µm, im allgemeinen beträgt der mittlere Teilchendurchmesser der Teilchen 1 bis 6 µm. Übliche vakuoleniniziierende Füllstoffe sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum) und Siliciumdioxid, worunter Calciumcarbonat und Siliciumdioxid bevorzugt eingesetzt werden.

Als organische Füllstoffe kommen die üblicherweise verwendeten, mit dem Polymeren der Basisschicht unverträglichen Polymeren in Frage, insbesondere solche wie HDPE, Copolymere von cyclischen Olefinen wie Norbornen oder Tetracyclododecen mit Ethylen oder Propen (COC), Polyester, Polystyrole, Polyamide, halogenierte organische Polymere, wobei Polyester wie beispielsweise Polybutylenterephthalate und Cycloolefincopolymere bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Gegebenenfalls enthält die Basisschicht der opaken Folie zusätzlich zu den vakuoleninizüerende Füllstoffe Pigmente, vorzugsweise TiO₂, im allgemeinen in einer Menge von maximal 10 Gew.-%, vorzugsweise 1 bis 8 Gew.-%, insbesondere 2 bis 5 Gew.-%, bezogen auf das Gewicht der Basisschicht.

Pigmente sind im Sinne der vorliegenden Erfindung unverträgliche Teilchen, die im wesentlichen nicht zur Vakuolenbildung beim Verstrecken der Folie führen und im allgemeinen einen mittleren Teilchendurchmesser im Bereich von 0,01 bis maximal 1 µm aufweisen. Übliche Pigmente sind z.B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden.

Gegebenenfalls können der Basisschicht in an sich bekannter Weise die vorstehend für die Folie A beschriebenen Additive wie Antistatika, Neutralisationsmittel, Gleitmittel und/oder Stabilisatoren, in jeweils wirksamen Mengen zugesetzt werden, worunter Neutralisationsmittel und Stabilisatoren und Antistatika bevorzugt sind.

Es ist erfindungswesentlich, daß die opake Folie als Laminatbestandteil mindestens eine Zwischenschicht aufweist, welche auf der Oberfläche der Basisschicht aufgebracht ist. Gegebenenfalls kann eine zweite Zwischenschicht auf der gegenüberliegenden Oberfläche der Basisschicht vorhanden sein. Die Zwischenschicht/en kann/können aus den für die Basisschicht beschriebenen olefinischen Polymeren aufgebaut sein. Im allgemeinen enthält/enthalten die Zwischenschichtlen 80 bis 100 Gew.-%, vorzugsweise 90 bis <100 Gew.-% Polyolefin, wobei unter den möglichen Polyolefinen die vorstehend beschriebenen Propylenpolymeren für die Basisschicht der Folie B bevorzugt sind. Die Zwischenschicht/en kann/können die für die einzelnen Schichten beschriebenen üblichen Additive wie Antistatika, Neutralisationsmittel, Gleitmittel und/oder Stabilisatoren enthalten. In einer weiteren Ausführungsform enthält die Zwischenschicht Pigmente, welche vorstehend für die Basisschicht beschrieben sind. Auch für die Zwischenschicht ist TiO₂ als Pigment bevorzugt Im allgemeinen enthält die Zwischenschicht 1 bis 10 Gew.-%, insbesondere 1 bis 8 Gew.-% Pigment, vorzugsweise TiO₂, jeweils bezogen auf das Gewicht der Zwischenschicht. Die Dicke der Zwischenschicht/en ist größer als 0,3 µm und liegt vorzugsweise im Bereich von 1,0 bis 15 µm, insbesondere 1,5 bis 10 µm.

Des weiteren ist es erfindungswesentlich, daß die Zwischenschicht im wesentlichen frei von Vakuolen ist, vorzugsweise enthält die Zwischenschicht keine Vakuolen. Es wurde gefunden, daß Vakuolen in der Zwischenschicht einen negativen Einfluß auf die Lasermarkierung des Laminats haben. Die vakuolenhaltige Zwischenschicht führt zu einer Verminderung des Kontrasts der Markierung und zu einer verschlechterten Auflösung des mittels Laserstrahls erzeugten Schriftzuges. Die Zwischenschicht enthält daher im allgemeinen kein CaCO₃ oder organische Polyester oder andere vakuoleninitierende Teilchen deren mittlere Teilchengröße über 1 µm liegt und zur Erzeugung von Vakuolen beim Verstrecken führen.

Es ist weiterhin wesentlich, daß die opake Folie B als Laminatbestandteil mindestens eine Deckschicht aufweist, welche auf der Oberfläche der Zwischenschicht aufgebracht ist. Gegebenenfalls kann eine zweite Deckschicht auf der gegenüberliegenden Seite vorhanden sein, wobei diese zweite Deckschicht auf der Oberfläche der Basisschicht oder auf der Oberfläche einer zweiten Zwischenschicht aufgebracht sein kann. Die Deckschicht/en sind aus Polymeren aus Olefinen mit 2 bis 10 Kohlenstoffatomen aufgebaut und enthalten im allgemeinen 95 bis 100 Gew.-% Polyolefin, vorzugsweise 98 bis <100Gew.-% Polyolefin, jeweils bezogen auf das Gewicht der Deckschicht/en.

Beispiele für geeignete olefinische Polymere der Deckschicht/en der Folie B sind Propylenhomopolymere, Co- oder Terpolymere aus Ethylen- Propylen oder Butyleneinheiten oder Mischungen aus den genannten Polymeren. Hierunter sind bevorzugte Polymerisate Propylenhomopolymere, wie sie vorstehend für die Basisschicht beschrieben wurden oder
- statistische Ethylen-Propylen-Copolymere mit einem Ethylengehalt von 1 bis 10 Gew.-%, bevorzugt 2,5 bis 8 Gew.-%, oder
- statistische Propylen-Butylen-1-Copolymere mit einem Butylengehalt von 2 bis 25 Gew.-%, bevorzugt 4 bis 20 Gew.-%, oder
- statistische Ethylen-Propylen-Butylen-1-Terpolymere mit einem Ethylengehalt von 1 bis 10 Gew.-% und einem Butylen-1-Gehalt von 2 bis 20 Gew.-%, oder
- eine Mischung bzw. Blend aus Ethylen-Propylen-Butylen-1-Terpolymeren und Propylen-Butylen-1-Copolymeren mit einem Ethylengehalt von 0,1 bis 7 Gew.-% und einem Propylengehalt von 50 bis 90 Gew.-% und einem Butylen-1-Gehalt von 10 bis 40 Gew.-%.

Die Angaben in Gew.-% beziehen sich jeweils auf das Gewicht des Polymeren. Die in der oder den Deckschicht eingesetzten vorstehend beschriebenen Co- und/oder Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150 DC. Alle vorstehend angegebenen Schmelzflußindizes werden bei 230 □C und einer Kraft von 21,6 N (DIN 53 735) gemessen.

Gegebenenfalls können der/den Deckschicht/en die vorstehend für die Folie A beschriebenen Additive wie Antistatika, Neutralisationsmittel, Gleitmittel und/oder Stabilisatoren, sowie gegebenenfalls zusätzlich Antiblockmittel zugesetzt werden.

In einer bevorzugten Ausführungsform wird die Oberfläche der Deckschicht einem Verfahren zur Erhöhung der Oberflächenspannung unterworfen. Geeignet sind Corona-, Flamm- oder Plasmabehandlungsverfahren. Bei der Herstellung des Laminates aus einer einseitig behandelten opaken Folie B, wird bevorzugt die auf der Zwischenschicht aufgebrachte Deckschicht behandelt und mit dieser Seite gegen die transparente Folie A laminiert.

Die Dicke der Deckschicht/en ist größer als 0,1 µm und liegt vorzugsweise im Bereich von 0,1 bis 5µm, insbesondere 0,5 bis 3 µm, wobei beidseitige Deckschichten gleich oder verschieden dick sein können. Die Gesamtdicke der opaken Folie B kann variieren und beträgt vorzugsweise 4 bis 100 µm, insbesondere 5 bis 80 µm, vorzugsweise 20 bis 60 µm, wobei die Basisschicht etwa 40 bis 90 % der Gesamtfoliendicke ausmacht.

Die Folien A und B, welche zu dem erfindungsgemäßen Laminat verarbeitet werden sind vorzugsweise beide biaxial orientiert und können nach an sich bekannten Stenter- oder Blasverfahren hergestellt werden, wobei für die opake Folie nur das Stenterverfahren geeignet ist.

Im Rahmen des Stenterverfahrens werden die den einzelnen Schichten der Folie entsprechenden Schmelzen durch eine Flachdüse coextrudiert werden, die so erhaltene Folie zur Verfestigung auf einer oder mehreren Walze/n abgezogen, die Folie anschließend gestreckt (orientiert), die gestreckte Folie thermofixiert und gegebenenfalls an der zur Behandlung vorgesehenen Oberflächenschicht plasmacorona- oder flammbehandelt.

Eine biaxiale Streckung (Orientierung) wird sequentiell oder simultan durchgeführt. Die sequentielle Streckung wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist. Die weitere Beschreibung der Folienherstellung erfolgt am Beispiel einer Flachfolienextrusion mit anschließender sequentialer Streckung.

Hierbei wird wie beim Extrusionsverfahren üblich das Polymere bzw. die Polymermischung der einzelnen Schichten in einem Extruder komprimiert und verflüssigt, wobei die Laserpigmente, Füllstoffe und andere gegebenenfalls zugesetzte Additive bereits im Polymer bzw. in der Polymermischung enthalten sein können. Die Laserpigmente und Füllstoffe können auch über ein Masterbatch zugesetzt werden.

Die Schmelzen werden dann gleichzeitig durch eine Flachdüse (Breitschlitzdüse) gepreßt, und die ausgepreßte mehrschichtige Folie wird auf einer oder mehreren Abzugswalzen bei einer Temperatur von 10 bis 100 °C, vorzugsweise 20 bis 50°C, abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man vorzugsweise bei einer Temperatur von 80 bis 150 °C zweckmäßigerweise mit Hilfe zweier entsprechend dem angestrebten Streckverhältnis verschieden schnellaufender Walzen durchführen und das Querstrecken vorzugsweise bei einer Temperatur von 120 bis 170°C mit Hilfe eines entsprechenden Kluppenrahmens. Die Längsstreckverhältnisse liegen im Bereich von 4 bis 8 vorzugsweise 5 bis 6. Die Querstreckverhältnisse liegen im Bereich von 5 bis 10, vorzugsweise 7 bis 9.

An die Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Bevorzugt wirdmerden nach der biaxialen Streckung eine oder beide Oberfläche/n der Folie nach einer der bekannten Methoden plasma-, corona- oder flammbehandelt. Die Behandlungsintensität liegt im allgemeinen im Bereich von 37 bis 50mN/m, vorzugsweise 39 bis 45 mN/m.

Die Folien A und B werden in an sich bekannter Weise zu einem Laminat verarbeitet. Hierbei ist es bevorzugt die Deckschichten der Folien gegeneinander zu laminieren. Falls Folien laminiert werden welche beidseitig Deckschichten aufweisen, sollte vorzugsweise zumindest eine der zu laminierenden Oberflächen oberflächenbehandelt sein. Eine Oberflächenbehandlung verbessert das Haftvermögen der beiden Folien aufeinander bei der Verarbeitung zum Laminat Es ist erfindungwesentlich, daß die opake Folie mit derjenigen Seite gegen die transparente Folie laminiert wird, welche eine Zwischenschicht aufweist. Diese "Zwischenschichtseite" bildet die Innenseite des Laminats. Im Falle einer opaken Folie mit beidseitigen Zwischenschichten, d.h. einer fünfschichtige Folie, sollte diejenige Seite der Folie B zur Laminierung verwendet werde, welche den höheren Oberflächenglanz aufweist.

Überraschenderweise wurde gefunden, daß nicht nur die optischen Eigenschaften, wie Weißgrad und Opazität der opaken Folie zu einem guten Erscheinungsbild der Markierung beitragen. Auch der Glanz der zu laminierende Seite spielt eine wichtige Rolle. Insbesondere war es überraschend, daß ein Laminat aus Papier und transparenter Folie A wesentlich schlechter für die Markierung geeignet war. Es wurde gefunden, daß nicht nur Opazität und Weißgrad als Hintergrund für die transparente Folie die Markierung besonders gut sichtbar machen. Vielmehr trägt die im Aufbau der opaken Folie vorhandene Zwischenschicht wesentlich zu den gewünschten Ergebnissen hinsichtlich Kontrast, Auflösung und Randschärfe der Markierung bei.

Es wurde gefunden, daß eine besonders glatte oder glänzende Oberfläche der Folie B nach der Laminierung mit dieser Glanzoberfläche die Markierbarkeit der Folie deutlich verbessert. Vergleichbare opake Folien ohne Zwischenschichten (daher mit einem niedrigeren Glanz) zeigen einen wesentlich schlechteren Kontrast der Markierung. Auch eine Füllung der Zwischenschicht auf der zu laminierenden Seite mit vakuoleninitierenden Füllstoffen zeigt negative Auswirkungen. Dieses Ergebnis war besonders überraschend, da ursprünglich erwartet wurde, daß eine besonders hohe Opazität und ein besonders hoher Weißgrad zu einer besonders gut erkennbaren Markierung auf dem Laminat führen würde. Wieso die Beschaffenheit der Oberfläche (im Laminat die innere Oberfläche) der zu lamierenden opaken Folie B überhaupt einen Einfluß auf die Qualität der Markierung hat ist nicht vollständig verstanden. Aber es hat sich gezeigt, daß die Zwischenschicht ohne Vakuolen das Ergebnis eindeutig verbessert.

In einer bevorzugten Ausführungsform liegen die Glanzwerte der opaken Folien auf der zu laminierenden Seite in einem Bereich von 50 bis 100, vorzugsweise 60 bis 90 insbesondere 65 bis 85, nach DIN 67530 bei einem Meß-Winkel von 20°.

Die Laminierung kann mittels an sich bekannter Verfahren erfolgen. Geeignet sind sowohl die Extrusionslaminierungen als auch Laminierverfahren mit Hilfe eines Klebers. Derartige Laminierverfahren sind bekannter Stand der Technik.

Auch die Verfahren zur Markierung mittels Laser sind an sich bekannt. Hierfür wird die Folie in den Strahlengang eines Lasers, vorzugsweise eines Nd:YAG-Lasers gebracht. Es versteht sich von selbst, daß die Seite mit der laserpigmenthaltigen Folie A dem Laser bei der Markierung zugewendet wird. Die Wahl des Lasers richtet sich nach der Wellenlänge, bei welcher das Pigment, bzw. die Folie einen möglichst hohen Absorptionsquerschnitt aufweist. Der Farbton und die Farbtiefe der Markierung hängen von der Bestrahlungszeit und der Energiedichte der Strahlung ab und können vom Fachmann leicht durch Variation der genannten Parameter optimiert werden. Absorptionsquerschnitte können durch gezielte Variation der Wellenlängen ermittelt werden.

Das erfindungsgemäße lasermarkierbare Laminat ist für alle Anwendungen geeignet, bei welchen herkömmliche Druck- und Beschriftungsverfahren durch eine Laserbeschriftung oder Lasermarkierung ersetzt oder ergänzt werden können. Die erzeugte Markierung ist eine besonders widerstandfähige Beschriftung, die durch Feuchtigkeit, Lösemittel, mechanische Belastung, Einwirkung von Sonnen oder UV-Strahlung, manuellen Abrieb oder ähnliches auch über einen langen_{.} Zeitraum hinweg nicht beeinträchtigt wird. Insbesondere lassen sich auf diese Weise besonders hoch aufgelöste Beschriftungen, Codes, Zeichen oder ähnliches anbringen, die auch machinenlesbar gestaltet werden können.

Das Laminat kann entweder selbst zur Verpackung von Gebrauchsgütern eingesetzt werden, wobei gegebenenfalls übliche Bedruckungen, Kaschierungen, Metallisierungen auf der Oberfläche der opaken Folie B vor der Laminierung mit der transparenten Folie A erfolgen können, wobei im allgemeinen die "innere" zu laminierende Oberfläche (d.h. die Seite der opaken Folie, welche höhere Glanzwete aufweißt) bedruckt oder metallisiert wird. Das Laminat kann auch in an sich bekannter Weise zu Folgeprodukten weiterverarbeitet werden. Insbesondere wird das Laminat als Etikett Anwendung finden, wobei die verschiedensten Etikettierverfahren zum Einsatz kommen können. Das Laminat kann als Haft-Etikett, Selbstklebe-Etikett, In-Mould oder Blow Mould Etikett verwendet werden, wobei sowohl dekorative als auch informative Markierungen oder Beschriftungen mittels Laser aufgebracht werden können.

Weiterhin kann das Laminat zur Erzeugung von tastbaren Informationen verwendet werden. Die Lasermarkierung hinterläßt nicht nur eine optisch erkennbare Markierung. Zusätzlich erzeugte der Laserstrahl an der Stelle des Auftreffens auch eine Erhebung auf der an sich glatten Oberfläche des Laminats. Dieser Effekt kann zur Herstellung von Blindenschriften eingesetzt werden. Die erhabene mechanische Markierung ist besonders abriebfest und haltbar.

Des weiteren wurde überraschenderweise gefunden, daß das Laminat ein besonders gut kontrollierbares Reißverhalten entlang der Lasermarkierung aufweist. Damit ist das Laminat auch besonders vorteilhaft als Easy-Opening Folie anwendbar. Dem Verbraucher wird durch die optische Markierung angezeigt wie die einzureißende Linie verläuft. Es können auf diese Weise Verpackung derart gestaltet werden, daß sie nicht nur längs einer geraden Linie aufreißen. Die Gestaltung beliebiger Trenn- und Aufreißlinien ist möglich.

Dieser Effekt ist besonders überraschend, da OPP-Folien an sich ein schlechtes, weil völlig unkontrolliertes Reißverhalten aufweisen. Auch wenn vielleicht eine mechanische Schwächung der Folie A entlang der Markierung erwartet werden könnte, so war daraus nicht ableitbar, daß dieser Effekt in der Folie A das Reißverhalten des gesamten Laminats bestimmt.

Zur Charakterisierung der Rohstoffe und der Folien wurden die folgenden Meßmethoden benutzt:

### Schmelzflußindex

Der Schmelzflußindex wurde nach DIN 53 735 bei 21,6 N Belastung und 230 °C gemessen.

### Mittlere Teilchengröße

Die mittlere Teilchengröße wurde mittels Bildanalyse ermittelt. Hierfür wird eine Probe in Wasser zur Vereinzelung der Teilchen dispergiert und auf einen Glasträger aufgebracht. Anschließend wird die Probe getrocknet und unter dem Rasterelektronenmikroskop untersucht. Hierfür werden durch eine geeignete Einstellung von Helligkeit und Kontrast die einzelnen Teilchen als Grauwertabbildung sichtbar gemacht. Ober eine Fläche von 10mm² wird die jeweilige Fläche der vereinzelten Teilchen gemessen und der Teilchendurchmesser als Durchmesser eines flächengleichen Kreises ausgegeben. Diese Meßwerte werden nach Größenbereichen klassiert und geben die Verteilung der Teilchengröße an. Der mittlere Teilchendurchmesser wird als Mittelwert der Verteilungskurve bestimmt.

### Opazität und Weißgrad

Die Bestimmung der Opazität und des Weißgrades erfolgt mit Hilfe des elektrischen Remissionsphotometers "ELREPHO" der Firma Zeiss, Oberkochem (DE), Normlichtart C, 2□ Normalbeobachter. Die Opazität wird nach DIN 53 146 bestimmt. Der Weißgrad wird als WG = RY + 3RZ - 3RX definiert. WG = Weißgrad; RY, RZ, RX = entsprechende Reflexionsfaktoren bei Einsatz des Y-, Z- und X-Farbmeßfilters. Als Weißstandard wird ein Preßling aus Bariumsulfat (DIN 5033, Teil 9) verwendet. Eine ausführliche Beschreibung ist z.B. in Hansl Loos "Farbmessung", Verlag Beruf und Schule, Itzehoe (1989), beschrieben.

### Lichtdurchlässigkeit

Die Lichtdurchlässigkeit wird in Anlehnung an ASTM-D 1003-77 gemessen.

### Schmelzpunkt

DSC-Messung, Maximum der Schmelzkurve, Aufheizgeschwindigkeit 20 °C/min.

### Trübung

Die Trübung der Folie wurde nach ASTM-D 1003-52 gemessen.

### Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

### Qualität der Markierung

Die Qualität der Markierung hinsichtlich Auflösung, Kontrast und Randschärfe wird visuell beurteilt.

### Beispiel 1: Herstellung der transparenten Folie A

Es wurde durch Coextrusion und anschließende stufenweise Orientierung in Längs- und Querrichtung eine transparente dreischichtige Folie mit symmetrischem Aufbau mit einer Gesamtdicke von 20 µm hergestellt. Die Deckschichten hatten eine Dicke von jeweils 0,7 µm.

### Basisschicht:

| | |
|---|---|
| - 96,74 Gew.-% | isotaktisches Propylenhomopolymer mit einem Schmelzpunkt von 166 °C und einem Schmelzflußindex von 3,4 g/10min |
| 3,00 Gew.-% | eines Masterbatchs aus 80 Gew.% Ethylenhomopolymer und 20 Gew.-% des Laserpigments, entsprechend einem Gehalt von 0,6 Gew.-% Laserpigment bezogen auf die Schicht; das Laserpigment war ein beschichteter Glimmer dessen Beschichtung aus Metalloxiden (SbO, SnO, TiO₂) bestand. |
| 0,13 Gew.% | Irganox 1010 |
| 0,13 Gew.-% | Armostat |

### Deckschichten:

| | |
|---|---|
| ~ 99,5 Gew.-% | isotaktisches Polypropylenhomopolymer mit einem Schmelzpunkt von 166°C und einem Schmelzflußindex von 3,4 g/10min |
| 0,5 Gew.-% | Polydimetyhlsiloxan |

Alle Schichten erhielten Stabilisatoren und Neutralisationsmittel in üblichen Mengen. Die Herstellungsbedingungen in den einzelnen Verfahrensschritten waren:

| | | | |
|---|---|---|---|
| Extrusion: | Temperaturen | Basisschicht: | 260 °C |
| | | Zwischenschichten: | 255 °C |
| | | Deckschichten: | 240 °C |
| | Temperatur der Abzugswalze: | | 20 °C |
| Längsstreckung: | Temperatur: | | 110 °C |
| | Längsstreckverhältnis: | | 5,5 |
| Querstreckung: | Temperatur: | | 160 °C |
| | Querstreckverhältnis: | | 9 |
| Fixierung: | Temperatur: | | 150 °C |
| | Konvergenz: | | 5 % |

Die Folie wurde anschließend beidseitig mittels Corona vorbehandelt.

### Beispiel 2 Herstellung der opaken Folie B

Es wurde durch Coextrusion und anschließende stufenweise Orientierung in Längs- und Querrichtung eine opake vierschichtige Folie, gemäß einem Schichtaufbau Deckschicht D1/Zwischenschicht Z/Basisschicht B/Deckschicht D2 mit einer Gesamtdicke von 35 µm hergestellt. Die Deckschichten D1 und D2 hatten eine Dicke von jeweils 0,7 µm. Die Zwischenschichten Z hatte eine Dicke von 3 µm. Die Folie wurde auf der Oberfläche der Deckschicht D1 mittels Corona vorbehandelt

### Basisschicht (B) :

| | |
|---|---|
| - 90,25 Gew.-% | isotaktisches Propylenhomopolymer mit einem Schmelzpunkt von 166 °C und einem Schmelzflußindex von 3,4 g/10min |
| 9,5 Gew.-% | eines Masterbatchs aus 30 Gew.% Propylenhomopolymer und 45 Gew.-% CaCO₃ und 25 Gew.-% TiO₂, entsprechend einem Gehalt von 4,3 Gew.-% CaCO₃ und 2,4 Gew.-% TiO₂, bezogen auf die Schicht |
| 0,13 Gew.-% | Armostat |
| 0,12 Gew.-% | Irganox |

### Zwischenschicht (Z):

| | |
|---|---|
| 99,73 Gew.-% | isotaktisches Propylenhomopolymer mit einem Schmelzpunkt von 166 °C und einem Schmelzflußindex von 3,4 g/10min |
| 0,14 Gew.-% | Armostat |
| 0,13 Gew.-% | Irganox |

### Deckschichten (D1):

| | |
|---|---|
| 98,8 Gew.-% | statistische Ethylen-Propylen-Copolymer mit einem Ethylengehalt von ca. 4 Gew.-% und einem Schmelzpunkt von ca. 120°C. Erucasäureamid |
| 1,2 Gew.% | SiO₂ als Anitiblockmittel |

### Deckschicht (D2):

| | |
|---|---|
| 98,8 Gew.-% | statistische Ethylen-Propylen-Copolymer mit einem Ethylengehalt |
| | von ca. 4 Gew.-% und einem Schmelzpunkt von ca. 120°C. Erucasäureamid |
| 1,2 Gew.-% | SiO₂ als Anitiblockmittel |

Alle Schichten erhielten Stabilisatoren und Neutralisationsmittel in üblichen Mengen. Die Herstellungsbedingungen in den einzelnen Verfahrensschritten waren:

Die Herstellungsbedingungen in den einzelnen Verfahrensschritten waren:

| | | | |
|---|---|---|---|
| Extrusion:: | Temperaturen | Basisschicht: | 260 °C |
| | | Zwischenschichten: | 255 °C |
| | | Deckschichten: | 240 °C |
| | Temperatur der Abzugswalze: | | 20 °C |
| Längsstreckung: | Temperatur: | | 110 °C |
| | Längsstreckverhältnis: | | 5,5 |
| Querstreckung: | Temperatur: | | 160 °C |
| | Querstreckverhältnis: | | 9 |
| Fixierung: | Temperatur | | 150 °C |
| | Konvergenz: | | 5 % |

Die Folie hatte auf der D1-Seite einen Oberflächenglanz von 70 bei einem Meßwinkel von 20°.

### Beispiel 3 Laminierung Markierung

Die wie in Beispiel 1 beschriebene transparente Folie und die wie in Beispiel 2 beschriebene opake Folie wurden mittels Schmelzextrusion laminiert, und mit einem Nd-Yag Laser markiert, wobei die Glanzseite der opaken Folie gegen die transparente Folie laminiert wurde. (D1 der opaken Folie gegen eine Deckschicht der transparenten Folie)

### Vergleichsbeispiel 1 Laminierunggegen Papier

Die transparente Folie gemäß Beispiel 1 wurde mittels Kleber gegen ein Papier laminiert und anschließend gemäß Beispiel 3 markiert.

### Vergleichsbeispiel 2 Opake Folie ohne Zwischenschicht

Es wurde eine opake Folie wie in Beispiel 2 beschrieben hergestellt, jedoch ohne die beschriebene Zwischenschicht. Der Glanz betrug auf beiden Seiten der Folie 40. Diese dreischichtige opake Folie wurde mit einer transparenten Folie gemäß Beispiel 1 laminiert und markiert wie in Beispiel 3 beschrieben.

### Vergeichsbeispel 3 Opake Folie mit Vakuolen in der Zwischenschicht

Es wurde eine opake Folie wie in Beispiel 2 beschrieben hergestellt. Jedoch wurde der Zwischenschicht über ein Masterbatch CaCO₃ hinzugefügt, so daß die Zwischenschicht 3 Gew.-% CaCO₃ enthielt und Vakuolen aufwies. Der Glanz betrug jetzt 40 bei einem Meßwinkel von 20°. Diese Folie wurde mit einer transparenten Folie gemäß Beispiel 1 wie in Beispiel 3 beschrieben laminiert und markiert.

### Vergleichsbeispiel 4 Lamierung gegen die andere Oberfläche

Es wurden die Folien gemäß Beispiel 1 und 2 wie in Beispiel 3 beschrieben laminiert und anschließend markiert. Im Unterschied zu Beispiel 3 wurde jedoch gegen die mattere Deckschicht D2 der opaken Folie gegen die transparente Folie laminiert.

Das erfindungsgemäße Laminat nach Beispiel 3 zeigte eine kontrastreiche gut erkennbare Markierung, die zusätzliche eine klare Randschärfe aufwies. Die Markierung läßt sich klar und deutlich als dunkler Schriftzug auf dem weißen Hintergrund des Laminats wahrnehmen. Alle Laminate nach den Vergleichsbeispiel zeigten ein schwache Markierung, welche auf Grund mangelnden Kontrastes und Unschärfen im Randbereich der Markierung optisch sehr viel schlechter zu erkennen waren

## Patentansprüche

1. Laminat, welches mindesten zwei Folien A und B aus thermoplastischen Kunststoffen umfaßt, **dadurch gekennzeichnet,**
**daß** die Folie A eine transparente, mehrschichtige orientierte olyolefinfolie aus einer Basisschicht und mindestens einer Deckschicht ist und die Basisschicht einen Zusatzstoff enthält, welcher Laserlicht absorbiert und
**daß** die Folie B eine orientierte, opake, mehrschichtige Polyolefinfolie ist, welche aus einer Basisschicht und mindesten einer, auf dieser Basisschicht aufgebrachten, Zwischenschicht und mindestens einer auf der Zwischenschicht aufgebrachten Deckschicht aufgebaut ist, wobei die opake Folie in ihrer Basisschicht vakuoleninizierende Füllstoffe und in der Basisschicht und/oder der Deckschicht zusätzlich TiO2 enthält, wobei die Zwischenschicht im wesentlichen keine Vakuolen aufweist und
das Laminat mittels Laserlicht in einem Wellenlängenbereich von 300 bis 10.000nm markierbar ist.

2. Laminat gemäß Anspruch 1, **dadurch gekennzeichnet, daß** das der laserabsorbierende Zusatzstoff ein SiO₂, vorzugsweise ein Glimmer ist.

3. Laminat gemäß Anspruch 1 und/oder 2, **dadurch gekennzeichnet, daß** der laserabsorbierende Zusatzstoff mit einer Beschichtung versehen ist.

4. Laminat gemäß einem oder mehreren der Ansprüche 1 bis 3, **dadurch gekennzeichnet, daß** der laserabsorbierende Zusatzstoff mit einer Beschichtung aus Metalloxiden, vorzugsweise SbO, SnO und/oder TiO2 versehen ist.

5. Laminat gemäß einem oder mehreren der Ansprüche 1 bis 3, **dadurch gekennzeichnet, daß** der laserabsorbierende Zusatzstoff eine Wellenlänge von 300 bis 10.000 nm, vorzugsweise die Strahlung eines Nd:YAG Lasers absorbiert.

6. Laminat gemäß einem oder mehreren der Ansprüche 1 bis 4, **dadurch gekennzeichnet, daß** das laserabsorbierende Pigment in einer Menge von 1 bis 10 Gew.-%, vorzugsweise 2 bis 8 Gew.-%, insbesondere 2 bis 5 Gew.-% in der Basisschicht der Folie A enthalten ist.

7. Laminat gemäß einem oder mehreren der Ansprüche 1 bis 5, **dadurch gekennzeichnet, daß** die Folie A beidseitig Deckschichten aufweist, die vorzugsweise aus Propylenco- und/oder Propylenterpolymerisaten aufgebaut sind.

8. Laminat gemäß einem oder mehreren der Ansprüche 1 bis 6, **dadurch gekennzeichnet, daß** die Deckschicht oder mindestens eine Deckschicht der Folie A mittels eines Verfahrens zur Erhöhung der Oberflächenspannung behandelt wurde und die Folie A auf dieser oberflächenbehandelten Seite gegen die Folie B laminiert ist.

9. Laminat gemäß einem oder mehreren der Ansprüche 1 bis 7, **dadurch gekennzeichnet, daß** die Folie A in ihrer Basisschicht Antistatika, vorzugsweise ein tertiäres aliphatisches Amin und ein Gleitmittel, vorzugsweise ein Erucasäureamid, enthält.

10. Laminat gemäß einem oder mehreren der Ansprüche 1 bis 8, **dadurch gekennzeichnet, daß** die Folie B in ihrer Basisschicht vakuoleninitierende Füllstoffe in einer Menge von 1 bis 10 Gew.-% bezogen auf das Gewicht der Basisschicht enthält.

11. Laminat gemäß einem oder mehreren der Ansprüche 1 bis 10, **dadurch gekennzeichnet, daß** der Füllstoff CaCO₃ oder Polyethylenterephtalat oder Polybutylenterephtalat ist.

12. Laminat gemäß einem oder mehreren der Ansprüche 1 bis 10, **dadurch gekennzeichnet, daß** TiO₂ in einer Menge von 1 bis 10 Gew.-% bezogen auf das Gesamtgewicht der Folie enthalten ist.

13. Laminat gemäß einem oder mehreren der Ansprüche 1 bis 10, **dadurch gekennzeichnet, daß** das TiO₂ in der Zwischenschicht in einer Menge von 1 bis 15 Gew.-% enthalten ist und die Zwischenschicht eine Dicke von 2 bis 15 µm aufweist.

14. Laminat gemäß einem oder mehreren der Ansprüche 1 bis 10, **dadurch gekennzeichnet, daß** die Folie B beidseitig Deckschichten aufweist und die Dicken der Deckschichten zwischen 0,5 und 5µm liegt.

15. Laminat gemäß einem oder mehreren der Ansprüche 1 bis 10, **dadurch gekennzeichnet, daß** die Folie B eine zweite Zwischenschicht auf der gegenüberliegenden Oberfläche der Basisschicht aufweist.

16. Laminat nach Anspruch 15 **dadurch gekennzeichnet, daß** die Dicke der zweiten Zwischenschicht 1 bis 15µm beträgt.

17. Laminat gemäß einem oder mehreren der Ansprüche 1 bis 10, **dadurch gekennzeichnet, daß** die zweite Zwischenschicht TiO₂, vorzugsweise in einer Menge von 1 bis 15 Gew.-% bezogen auf das Gewicht der Zwischenschicht enthält.

18. Laminat gemäß einem oder mehreren der Ansprüche 1 bis 10, **dadurch gekennzeichnet, daß** die oder mindestens eine Deckschicht mittels eines Verfahren zur Erhöhung der Oberflächespannung behandelt wurde, vorzugsweise Corona-, Plasma- oder Flammbehandelt ist.

19. Laminat gemäß einem oder mehreren der Ansprüche 1 bis 10, **dadurch gekennzeichnet, daß** die Folie B mit ihrer oberflächenbehandelten Seite laminiert ist.

20. Laminat gemäß einem oder mehreren der Ansprüche 1 bis 10, **dadurch gekennzeichnet, daß** die beiden Folien A und B mittels eines Klebers zusammengefügt sind.

21. Laminat gemäß einem oder mehreren der Ansprüche 1 bis 10, **dadurch gekennzeichnet, daß** die beiden Folien A und B mittels Extrusionslaminierung zusammengefügt sind.

22. Laminat gemäß einem oder mehreren der Ansprüche 1 bis 10, **dadurch gekennzeichnet, daß** es eine dunkle mittels Laserstrahl erzeugte Markierung aufweist.

23. Verfahren zur Lasermarkierung eines Laminats nach einem der Ansprüche 1 bis 23 **dadurch gekennzeichnet, daß** das Laminat mittels eines Nd:YAG Lasers markiert oder beschriftet wird.

24. Verwendung eines Laminats nach einem der Ansprüche 1 bis 23 zur Herstellung einer Verpackung.

25. Verwendung eines Laminats nach einem der Ansprüche 1 bis 23 zur Herstellung einer tastbaren Markierung, Beschriftung, Graphik und/oder sonstigen Information.

26. Verwendung nach Anspruch 25, **dadurch gekennzeichnet, daß** die Markierung eine Vertiefung oder erhaben ist.

27. Verwendung nach Anspruch 25 oder 26, **dadurch gekennzeichnet, daß** die tastbare Markierung, Beschriftung, Graphik und/oder sonstige Information in einer Blindenschrift aufgebracht wird.

28. Verwendung eines Laminats nach einem der Ansprüche 1 bis 22 zur Herstellung einer easy opening Verpackung.

29. Etikett enthaltend ein Laminat nach einem der Ansprüche 1 bis 23, **dadurch gekennzeichnet, daß** das Etikett eine optisch erkennbare oder tastbare Markierung, Beschriftung, Graphik und/oder sonstige Information aufweist.

30. Verwendung eines Etiketts nach Anspruchs 29 zum Etikettieren von Behältnissen mit Nahrungsmitteln.

31. Verwendung eines Lasers zur Herstellung einer erhabenen, tastbaren Markierung, Beschriftung, Graphik und/oder sonstige Information auf einer Folie aus thermoplastischen Polymeren.

## Claims

1. Laminate comprising at least two thermoplastic films A and B, **characterized in that**
film A is a transparent, multilayered oriented polyolefin film comprising a base layer and at least one top layer, and the base layer comprises an additive which absorbs laser light, and
film B is an oriented, opaque, multilayered polyolefin film which is built up from a base layer and at least one interlayer applied to this base layer and at least one top layer applied to the interlayer, where the opaque film comprises vacuole-initiating fillers in its base layer and additionally TiO2 in the base layer and/or top layer, where the interlayer contains essentially no vacuoles, and
the laminate can be marked by means of laser light in a wavelength range from 300 to 10,000 nm.

2. Laminate according to Claim 1, **characterized in that** the laser-absorbent additive is an SiO₂, preferably a mica.

3. Laminate according to Claim 1 and/or 2, **characterized in that** the laser-absorbent additive is provided with a coating.

4. Laminate according to one or more of Claims 1 to 3, **characterized in that** the laser-absorbent additive is provided with a coating of metal oxides, preferably SbO, SnO and/or TiO2.

5. Laminate according to one or more of Claims 1 to 3, **characterized in that** the laser-absorbent additive absorbs a wavelength of from 300 to 10,000 nm, preferably the radiation of an Nd:YAG laser.

6. Laminate according to one or more of Claims 1 to 4, **characterized in that** the laser-absorbing pigment is present in the base layer of film A in an amount of from 1 to 10% by weight, preferably from 2 to 8% by weight, in particular from 2 to 5% by weight.

7. Laminate according to one or more of Claims 1 to 5, **characterized in that** film A has top layers, preferably built up from propylene copolymers and/or propylene terpolymers, on both sides.

8. Laminate according to one or more of Claims 1 to 6, **characterized in that** the top layer or at least one top layer of film A has been treated by means of a process for increasing the surface tension, and film A is laminated on this surface-treated side against film B.

9. Laminate according to one or more of Claims 1 to 7, **characterized in that** film A comprises antistatics, preferably a tertiary aliphatic amine, and a lubricant, preferably an erucamide, in its base layer.

10. Laminate according to one or more of Claims 1 to 8, that film B comprises vacuole-initiating fillers in its base layer in an amount of from 1 to 10% by weight, based on the weight of the base layer.

11. Laminate according to one or more of Claims 1 to 10, **characterized in that** the filler is CaCO₃ or polyethylene terephthalate or polybutylene terephthalate.

12. Laminate according to one or more of Claims 1 to 10, **characterized in that** TiO₂ is present in an amount of from 1 to 10% by weight, based on the total weight of the film.

13. Laminate according to one or more of Claims 1 to 10, **characterized in that** the TiO₂ is present in the interlayer in an amount of from 1 to 15% by weight, and the interlayer has a thickness of from 2 to 15 µm.

14. Laminate according to one or more of Claims 1 to 10, **characterized in that** film B has top layers on both sides, and the thicknesses of the top layers is between 0.5 and 5 µm.

15. Laminate according to one or more of Claims 1 to 10, **characterized in that** film B has a second interlayer on the opposite surface of the base layer.

16. Laminate according to Claim 15, **characterized in that** the thickness of the second interlayer is from 1 to 15 µm.

17. Laminate according to one or more of Claims 1 to 10, **characterized in that** the second interlayer comprises TiO₂, preferably in an amount of from 1 to 15% by weight, based on the weight of the interlayer.

18. Laminate according to one or more of Claims 1 to 10, **characterized in that** the or at least one top layer has been treated by means of a process for increasing the surface tension, preferably corona-, plasma- or flame-treated.

19. Laminate according to one or more of Claims 1 to 10, **characterized in that** film B is laminated with its surface-treated side.

20. Laminate according to one or more of Claims 1 to 10, **characterized in that** the two films A and B are joined by means of an adhesive.

21. Laminate according to one or more of Claims 1 to 10, **characterized in that** the two films A and B are joined by means of extrusion lamination.

22. Laminate according to one or more of Claims 1 to 10, **characterized in that** it has a dark mark produced by means of a laser beam.

23. Process for the laser marking of a laminate according to one of Claims 1 to 23, **characterized in that** the laminate is marked or inscribed by means of an Nd:YAG laser.

24. Use of a laminate according to one of Claims 1 to 23 for the production of packaging.

25. Use of a laminate according to one of Claims 1 to 23 for the production of a tactile mark, inscription, graphic and/or other information.

26. Use according to Claim 25, **characterized in that** the mark is a depression or raised.

27. Use according to Claim 25 or 26, **characterized in that** the tactile mark, inscription, graphic and/or other information is applied in a reading code for the blind.

28. Use of a laminate according to one of Claims 1 to 22 for the production of easy-opening packaging.

29. Label comprising a laminate according to one of Claims 1 to 23, **characterized in that** the label has an optically recognizable or tactile mark, inscription, graphic and/or other information.

30. Use of a label according to Claim 26 for labelling containers with foods.

31. Use of a laser for the production of a raised, tactile mark, inscription, graphic and/or other information on a thermoplastic polymer film.

## Revendications

1. Elément stratifié comprenant au moins deux feuilles A et B en matières thermoplastiques, **caractérisé en ce que**
la feuille A est une feuille transparente en polyoléfine orientée multicouche laquelle est constituée d'une couche de base et d'au moins une couche de couverture, et ladite couche de base contient un additif absorbant de la lumière laser, et
la feuille B est une feuille opaque en polyoléfine orientée multicouche laquelle est constituée d'une couche de base et d'au moins une couche intermédiaire appliquée sur ladite couche de base et d'au moins une couche de couverture appliquée sur ladite couche intermédiaire, ladite feuille opaque contient dans sa couche de base des charges initiatrices de vacuoles et, de manière supplémentaire, du Ti02 dans la couche de base et/ou la couche de couverture, la couche intermédiaire étant sensiblement exempte de vacuoles, et
ledit élément stratifié est susceptible de subir une marquage au moyen de la lumière laser dont la longueur d'ondes est comprise entre 300 et 10 000 nm.

2. Elément stratifié selon la revendication 1, **caractérisé en ce que** ledit additif à absorption laser est un SiO₂, de préférence un mica.

3. Elément stratifié selon les revendications 1 et/ou 2, **caractérisé en ce que** ledit additif à absorption laser est pourvu d'un revêtement.

4. Elément stratifié selon l'une ou plusieurs des revendications 1 à 3, **caractérisé en ce que** ledit additif à absorption laser est pourvu d'un revêtement en oxydes de métaux, s'agissant préférentiellement de SbO, SnO et/ou de TiO2.

5. Elément stratifié selon l'une ou plusieurs des revendications 1 à 3, **caractérisé en ce que** l'additif à absorption laser absorbe une longueur d'onde comprise entre 300 et 10 000 nm, s'agissant préférentiellement du rayonnement d'un laser Nd:YAG.

6. Elément stratifié selon l'une ou plusieurs des revendications 1 à 4, **caractérisé en ce que** le pigment à absorption laser est contenu dans la couche de base de la feuille A dans une quantité comprise entre 1 et 10 % en poids, de préférence entre 2 et 8 % en poids, notamment entre 2 et 5 % en poids.

7. Elément stratifié selon l'une ou plusieurs des revendications 1 à 5, **caractérisé en ce que** les deux côtés de la feuille A sont pourvus de couches de couverture constituées préférentiellement de copolymères ou de terpolymères réalisés à partir de propylène.

8. Elément stratifié selon l'une ou plusieurs des revendications 1 à 6, **caractérisé en ce que** la couche de couverture ou au moins une couche de couverture de la feuille A a été traitée au moyen d'un procédé destiné à augmenter la tension superficielle, et la feuille A est appliquée par laminage contre la feuille B avec son côté ayant subi un tel traitement de surface.

9. Elément stratifié selon l'une ou plusieurs des revendications 1 à 7, **caractérisé en ce que** la feuille A contient dans sa couche de base des agents antistatiques, s'agissant préférentiellement d'une amine aliphatique tertiaire, et un agent de démoulage, s'agissant préférentiellement d'un amide d'acide érucique.

10. Elément stratifié selon l'une ou plusieurs des revendications 1 à 8, **caractérisé en ce que** la feuille B contient dans sa couche de base des charges initiatrices de vacuoles dans une quantité comprise entre 1 et 10 % en poids, par rapport au poids de la couche de base.

11. Elément stratifié selon l'une ou plusieurs des revendications 1 à 10, **caractérisé en ce que** ladite charge est du CaCO₃ ou du polyéthylènetéréphtalate ou du polybutylènetéréphtalate.

12. Elément stratifié selon l'une ou plusieurs des revendications 1 à 10, **caractérisé en ce que** ladite feuille contient du TiO₂ dans une quantité comprise entre 1 et 10 % en poids, par rapport à son poids total.

13. Elément stratifié selon l'une ou plusieurs des revendications 1 à 10, **caractérisé en ce que** le TiO₂ est contenu dans la couche intermédiaire dans une quantité comprise entre 1 et 15 % en poids, et la couche intermédiaire présente une épaisseur comprise entre 2 et 15 µm.

14. Elément stratifié selon l'une ou plusieurs des revendications 1 à 10, **caractérisé en ce que** les deux côtés de la feuille B sont pourvus de couches de couverture, et les épaisseurs desdites couches de couverture sont comprises entre 0,5 et 5 µm.

15. Elément stratifié selon l'une ou plusieurs des revendications 1 à 10, **caractérisé en ce que** la feuille B présente une deuxième couche intermédiaire sur la surface située à l'opposée à la couche de base.

16. Elément stratifié selon la revendication 15, **caractérisé en ce que** l'épaisseur de la deuxième couche intermédiaire est comprise entre 1 et 15 µm.

17. Elément stratifié selon l'une ou plusieurs des revendications 1 à 10, **caractérisé en ce que** la deuxième couche intermédiaire contient du TiO₂, de préférence dans une quantité comprise entre 1 et 15 % en poids, par rapport au poids de la couche intermédiaire.

18. Elément stratifié selon l'une ou plusieurs des revendications 1 à 10, **caractérisé en ce que** la ou l'au moins une couche de couverture a été traitée au moyen d'un procédé destiné à augmenter la tension superficielle, s'agissant préférentiellement d'un traitement corona, au plasma ou à la flamme.

19. Elément stratifié selon l'une ou plusieurs des revendications 1 à 10, **caractérisé en ce que** la feuille B a été soumise au laminage avec son côté ayant subi un traitement de surface.

20. Elément stratifié selon l'une ou plusieurs des revendications 1 à 10, **caractérisé en ce que** les deux feuilles A et B sont assemblées au moyen d'un adhésif.

21. Elément stratifié selon l'une ou plusieurs des revendications 1 à 10, **caractérisé en ce que** les deux feuilles A et B sont assemblées au moyen d'un adhésif.

22. Elément stratifié selon l'une ou plusieurs des revendications 1 à 10, **caractérisé en ce qu'**il présente un marquage sombre généré au moyen d'un faisceau laser.

23. Procédé de marquage au laser d'un élément stratifié selon l'une des revendications 1 à 23, **caractérisé en ce que** ledit élément stratifié est marqué ou pourvu d'une inscription au moyen d'un laser Nd:YAG.

24. Utilisation d'un élément stratifié selon l'une des revendications 1 à 23 pour fabriquer un emballage.

25. Utilisation d'un élément stratifié selon l'une des revendications 1 à 23 pour réaliser un marquage, une inscription, un élément graphique et/ou une autre information qui soient palpables.

26. Utilisation selon la revendication 25, **caractérisée en ce que** ledit marquage est un creux ou un élément faisant saillie.

27. Utilisation selon les revendications 25 ou 26, **caractérisée en ce que** le marquage, l'inscription, l'élément graphique et/ou l'autre information palpables est/sont appliqué(s) en une écriture pour malvoyants.

28. Utilisation d'un élément stratifié selon l'une des revendications 1 à 22 pour fabriquer un emballage à ouverture facile.

29. Etiquette contenant un élément stratifié selon l'une des revendications 1 à 23, **caractérisée en ce que** ladite étiquette comporte un marquage, une inscription, un élément graphique et/ou une autre information qui soient optiquement reconnaissables ou palpables.

30. Utilisation d'une étiquette selon la revendication 29 pour étiqueter des récipients contenant des aliments.

31. Utilisation d'un laser pour réaliser sur une feuille en polymères thermoplastiques un marquage, une inscription, un élément graphique et/ou une autre information qui soient palpables et qui fassent saillie.
